# EUROPEAN PATENT SPECIFICATION

(11) **EP 0 480 418 B1**
(45) Date of publication and mention of the grant of the patent: **12.08.1998**
(21) Application number: 91117288.0
(22) Date of filing: 10.10.1991
(51) Int. Cl.: H04N 1/00

(54) **Image reading device**
Bildlesegerät
Dispositif de lecture d'images

(30) Priority: 11.10.1990 JP 270483/90; 14.11.1990 JP 309487/90; 15.02.1991 JP 22073/91
(43) Date of publication of application: 15.04.1992
(73) Proprietor: CANON KABUSHIKI KAISHA, Tokyo (JP)
(72) Inventor: Ijuin, Kazuja, c/o Canon Kabushiki Kaisha, Ohta-ku, Tokyo (JP); Ichihashi, Hiroo, c/o Canon Kabushiki Kaisha, Ohta-ku, Tokyo (JP); Komiyama, Katsumi, c/o Canon Kabushiki Kaisha, Ohta-ku, Tokyo (JP); Sano, Yoshikazu, c/o Canon Kabushiki Kaisha, Ohta-ku, Tokyo (JP); Ogura, Makoto, c/o Canon Kabushiki Kaisha, Ohta-ku, Tokyo (JP); Hamamoto, Osamu, c/o Canon Kabushiki Kaisha, Ohta-ku, Tokyo (JP); Shimada, Tetsuya, c/o Canon Kabushiki Kaisha, Ohta-ku, Tokyo (JP)
(74) Representative: Tiedtke, Harro, Dipl.-Ing.

(56) References cited:
- EP-A- 66 625
- EP-A- 280 210
- DE-A- 3 422 867
- FR-A- 2 589 021
- US-A- 4 768 100
- US-A- 4 939 541
- PATENT ABSTRACTS OF JAPAN vol. 6, no. 258 (P-163) 17 December 1982 & JP-A-57 154 264 (RICOH K.K.) 24-09-1982
- PATENT ABSTRACTS OF JAPAN vol. 12, no. 351 (E-660) 20 September 1988 & JP-A-63 107 362 (SHARP CORP.) 12-05-1988
- PATENT ABSTRACTS OF JAPAN vol. 12, no. 367 (E-664) 30 September 1988 & JP-A-63 117 552 (CANON INC.) 21-05-1988
- PATENT ABSTRACTS OF JAPAN vol. 7, no. 251 (E-209) 8 November 1983 & JP-A-58 138 167 ( RICOH K.K. ) 16 August 1983
- PATENT ABSTRACTS OF JAPAN vol. 14, no. 105 (E-895) 26 February 1990 & JP-A-01 305 656 ( BROTHER IND. LTD. ) 8 December 1989

## Description

The present invention relates to an image reading device according to the preamble of claim 1, and more particularly to an original image reading device for optically reading image information of an original document and adapted for use in an image information processing apparatus such as a facsimile apparatus, an image scanner or the like.

The invention further relates to an information processing apparatus comprising such an image reading device.

Requirements for smaller dimension, lower weight and lower cost have become stronger in recent years in the field of image information processing apparatus, such as facsimile apparatus, image scanner or the like. For the facsimile apparatus in particular, there have emerged various requirements for the design and functions, in addition to the above-mentioned ones, following the expansion of market including so-called home facsimile for personal use.

For the original image reading device to be incorporated in such image information processing apparatus for optically reading the image information of the original document, there have been employed a reduction reading system utilizing a line sensor such as a CCD and a reduction optical system; a contact reading system utilizing a line sensor of a length equal to the width of the original, an equal-magnification optical system such as a condensing fiber lens array and a light source such as an LED array, all integrally assembled in a frame; and a complete contact reading system utilizing a line sensor and a light source integrally assembled in a frame, without the lens array, wherein the line sensor is maintained close to the original for directly reading the original image.

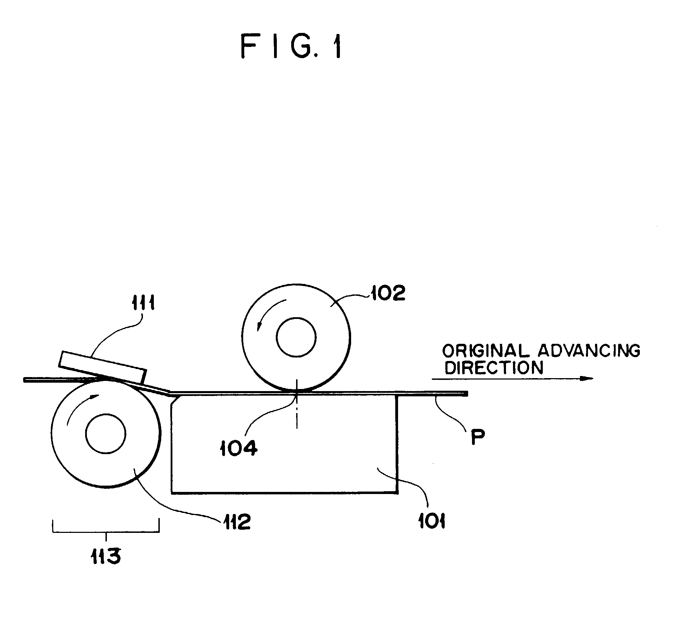

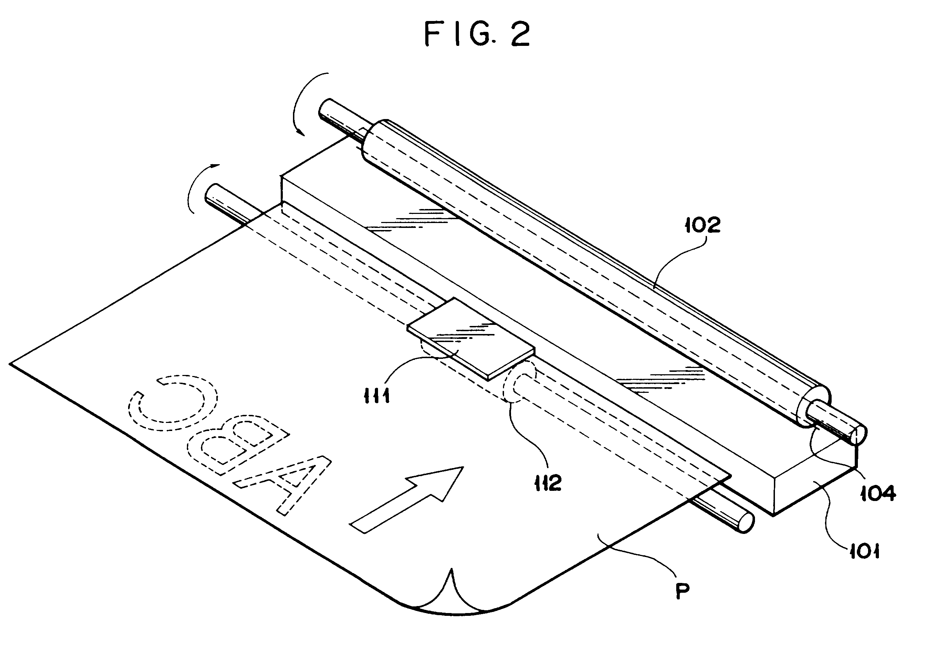

An example of such image reading device is schematically illustrated in Figs. 1 and 2 which are respectively a cross-sectional view and a schematic perspective view.

There are shown a line sensor 101 for optically reading the image of an original P; an automatic sheet feeding unit 113 consisting of a separating member 111 and a sheet feeding roller 112, for separating and feeding the originals P one by one toward said line sensor 101; and a transport (pressure) roller 102 serving as original contacting means for contacting the fed original P to a reading position 104 of the line sensor 101 and also as original transport means for transporting said original P.

In such image reading device, a transport (pressure) roller is provided opposite to the reading part of the contact sensor thereby maintaining the original in close contact with the reading line of said contact sensor, in order to prevent image blur at image reading, resulting from eventual lifting of the original from or movement thereof on the reading line of the line sensor.

Said transport (pressure) roller, for maintaining the original in close contact with the reading line of the reading part of the contact sensor, is generally made of a rubber material, in order to attain close contact of the original regardless of certain surface irregularities of said reading part.

Also the surface of said transport (pressure) roller is usually read by the reading part, prior to the reading of the image information of the original, for determining a reference color for image information reading of the original, and, for this purpose, said surface is usually white.

Thus a white rubber roller is generally employed for the transport (pressure) roller mentioned above.

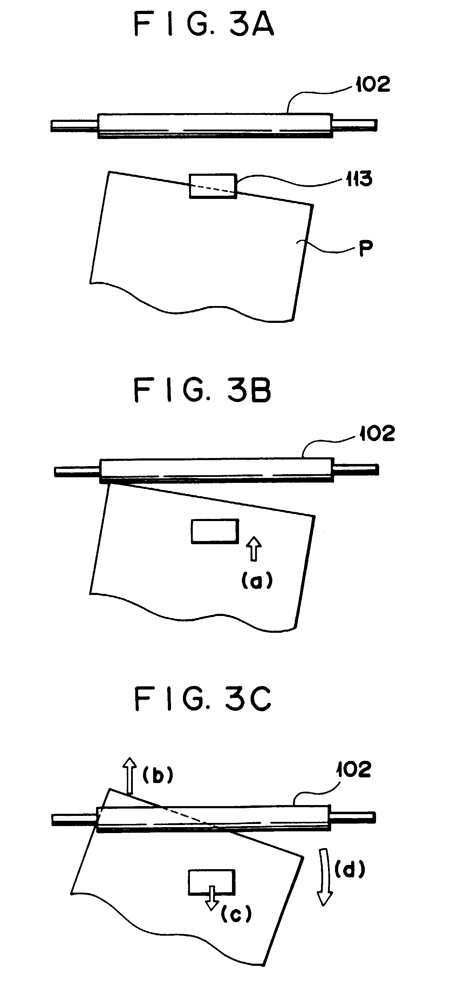

However, the functions of original transport means and original contacting means, if performed by a transport roller in the image reading device, may result in following drawbacks:
(1) In order to maintain the original in close contact with the line sensor for reading the original image by said line sensor, the transport roller has to be as long as the line sensor or the reading width of the original. Therefore the local unevenness in the transporting power results from the planarity of the reading face of the line sensor, eventually causing skewed advancement of the original;
(2) The transportation of the original in contact with the reading face of the line sensor increases the load on a motor for driving the transport roller, thus eventually leading to heat generation or control abnormality in said motor. Therefore, for achieving stable transportation of the original, there is required a large motor, which becomes an obstacle in cost reduction, compactization and weight reduction of the device;
(3) An original eventually fed in skewed state tends to become more skewed in the course of transportation, as will be explained in the following with reference to Figs. 3A to 3C.

Figs. 3A to 3C are schematic plan views of the image reading device shown in Figs. 1 and 2, wherein the line sensor is not illuminated but is positioned behind the transport roller 102.

When an original P is fed in a skewed state in the automatic sheet feeding unit 113 as shown in Fig. 3A, it is advanced to the transport roller 102, as shown in Fig. 3B, by the transporting force (a) of the automatic sheet feeding unit 113, indicated by an arrow. Then, as a part of the original P is pinched between the transport roller 102 and the line sensor as shown in Fig. 3C, said part is subjected to a transporting force (b) of the transport roller 102, indicated by an arrow. In general, the peripheral speed of the feed roller (not shown in the Figure) of the automatic sheet feeding unit 113 is selected somewhat smaller than that of the transport roller 102. Consequently a load (c) indicated by an arrow is generated in a direction opposite to the transport direction of the original, due to said different in peripheral speed and a load induced by the frictional member, and a rotating force (d), also indicated by an arrow, is generated by the aforementioned transporting force (b) and the load (c), thus causing an increased skew in the original P.

On the other hand, if a pressure roller separate from the transport roller is required, there are required a space above the reading part for positioning said pressure roller and a space for accommodating a drive system, such as gears, for driving said pressure roller in the same driving direction as that of the transport roller, so that the total height of the device inevitably increases.

Also if the pressure roller of a smaller diameter is employed for reducing the total height of the device, the pressure roller shows more bending so that the assembling precision of the reading part and the pressure roller has to be improved in order to securely guide the light, emitted from the light source of said reading part and reflected by the roller surface, to a photoelectric converting device in the reading part. For this reason there will result an increase in the manufacturing cost and a loss in the productivity.

Furthermore the pressure roller is required to have a small friction coefficient to the glass of the reading part but a large friction coefficient to the original for ensuring secure transportation, and it is difficult to select a material satisfying such requirements.

As explained in the foregoing, there are still left various technical problems, in order to satisfy the ever increasing requirements for smaller dimension, lower weight and lower cost of the image reading device.

According to the patent abstract of Japan, vol. 6, No. 258 (P163), 17. December 1982, JP-A-57 154 264, there is disclosed a generic image reading device according to the preamble of claim 1. In order to facilitate the removal of a jammed original, this device is provided with a pressure plate which can be lifted around a shaft. Furthermore, there are provided oscillating supporting levers for moving pressure rollers apart from feed roller, thus allowing an easy removal of the jam.

The object of the invention is to provide an image reading device having a simple construction by means of which an erroneous transporting of the original can be avoided. Furthermore, an information processing apparatus comprising such an image reading device is to be provided.

The object of the invention is achieved by means of the combination of the features defined in claim 1. An information processing apparatus comprising an image reading device according to the invention is defined in claim 18. Preferable embodiments of the invention are defined in the dependent claims.

An aim of the present invention is to provide a compact, light-weight and inexpensive image reading device, adapted for use in various image information processing apparatus such as a facsimile apparatus, an image sensor, a computer, a word processor, a copying machine or the like.

A further aim of the present invention is to provide an original image reading device capable of reading the original image with a simple construction without transporting the original in an erroneous oblique direction.

Still further aim of the present invention is to provide an easily handling original image reading device even if it including a contact type image sensor of which positioning and original transporting would be difficult.

Still further aim of the present invention is to provide an original image reading device removably combined together with an information processing apparatus easily.

Another aim of the present invention is to provide an image reading device capable of reducing the total height of the device, not requiring a high precision of assembling for guiding the reflected light to the reading part, and enabling easy selection of material for the pressurizing means.

Still another aim of the present invention is to provide an image reading device capable of resolving skewed advancement elevated cost and increased dimension for example of motor, and enabling to achieve reductions in dimension, weight and cost desired in recent years.

Still another aim of the present invention is to provide an image reading device, capable of improving the precision of assembly of components relating to original reading, by integrally positioning a frame and employing unit structure.

Still another aim of the present invention is to provide an image reading device capable of significantly reducing the works in designing, evaluation and production by standardizing said unit so as to be adaptable for various models of the image information processing apparatus, thereby enabling total cost reduction thereof.

Still another aim of the present invention is to provide an image reading device formed as a compact and light-weight unit, thereby facilitating the layout in the image information processing apparatus and increasing the freedom in designing thereof.

Still another aim of the present invention is to provide an image reading device which is easily replaceable by the operator without particular training, skill or tool, whereby the defect or malfunction of the image reading device in the image information processing apparatus can be easily repaired.

According to a preferred embodiment of the present invention, an image reading device comprises original pressing means including a flexible sheet, a flexible member for pressing said flexible sheet, and means for pressing said flexible member, thereby maintaining the original in close contact with reading means.

Thus, in the present invention, the pressing means for pressing the original is composed of a flexible sheet which is a flatter structure, whereby the total height of the device can be reduced.

Also in reading the surface of the pressing means by the reading means, since said surface is flat, there is not required a high precision of assembly, for guiding the light reflected from the surface of the pressing means to the reading means, in comparison with the case of employing a white rubber roller of a small diameter as the pressing means.

Furthermore, since the pressing means lacks the transporting function, the friction coefficient to the original or the reading means need not be considered, different from the case of white roller serving as the pressing and transporting means. For this reason the material selection for the pressing means can be facilitated.

The flexible sheet can be composed of an organic resinous film such as a polyester film, while the flexible member for pressing said flexible sheet can be composed for example of rubber sponge, and the means for pressing said flexible member can be composed for example of a weight exerting a pressure by the weight thereof, or a spring.

According to another embodiment of the present invention, there is provided an image reading device for reading image information by maintaining an original in contact or substantial contact with reading means such as a line sensor, illuminating said original with a light source and entering the light reflected from said original into said line sensor, wherein the reading part of the line sensor is positioned outside of the nip of an original transport roller and in the original feeding side of said nip, and original contacting means is provided at said reading part, whereby reductions in dimension, weight and cost can be realized.

In the following the invention is further illustrated by embodiments with reference to the enclosed drawings.
Fig. 1 is a schematic cross-sectional view of an original image reading device;
Fig. 2 is a schematic perspective view of an original image reading device;
Figs. 3A to 3C are views showing the state of transportation of an original in the original image reading device;
Fig. 4 is a cross-sectional view of an optical reading system in a facsimile apparatus;
Fig. 5 is a magnified cross-sectional view of the optical reading system shown in Fig. 4;
Figs. 6, 8A to 8C, 9, 10 and 13 are respectively schematic cross-sectional views explaining embodiments of the original image reading device of the present invention;
Figs. 7, 12, 14, 15 and 16 are schematic perspective views explaining respectively the embodiments;
Fig. 11 is a schematic cross-sectional view of a 4th embodiment of the original image reading device of the present invention; and
Fig. 17 is a schematic block diagram explaining an example of a facsimile apparatus in which the image reading device of the present invention can be used.

In the following there will be explained, with reference to attached drawings, an image reading device which is applied to a facsimile apparatus.

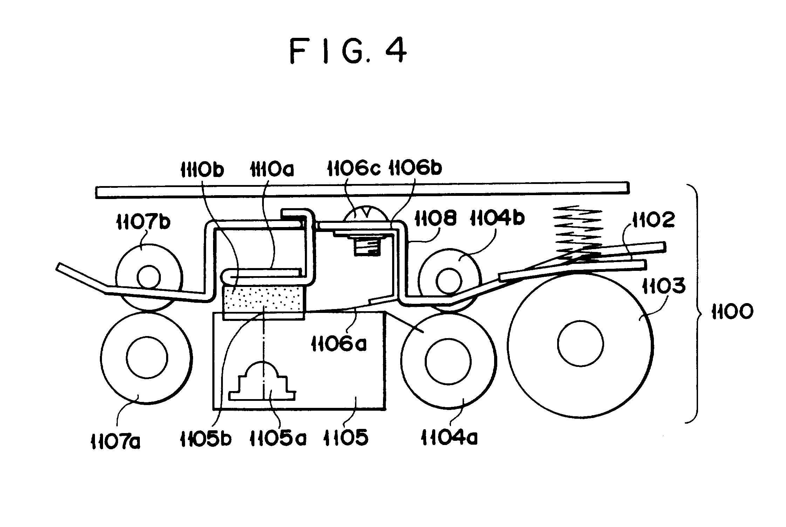

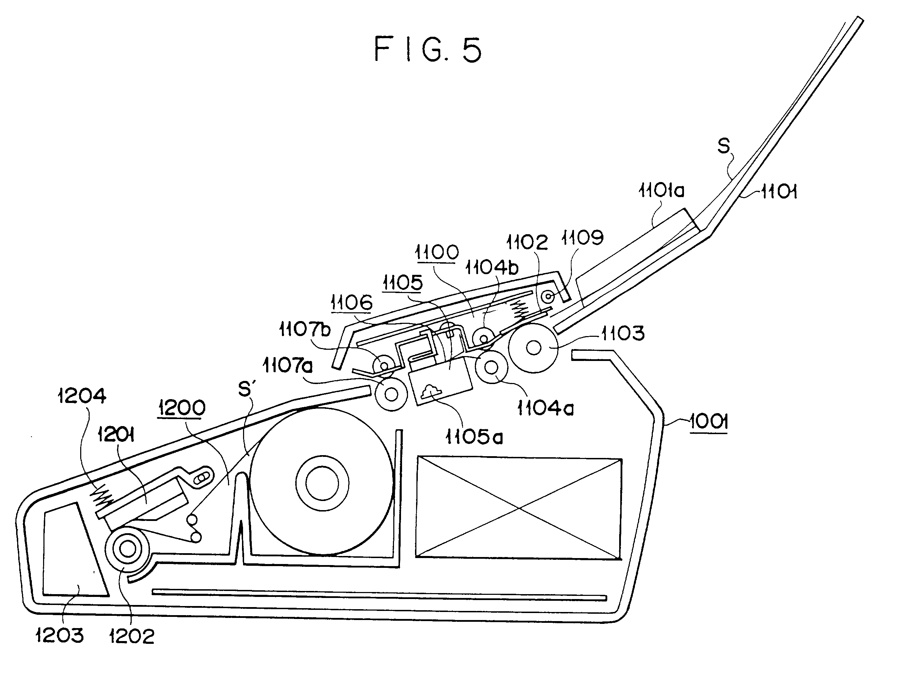

Fig. 4 is a cross-sectional view of the entire facsimile apparatus, and Fig. 5 is a magnified cross-sectional view of the optical reading system of said facsimile apparatus.

Referring to Figs. 4 and 5, an original tray 1101, extending diagonally from a main body 1001 in the upper right direction, can support a stack of plural originals S. On the upper face of the main body 1001, there is provided an optical reading system 1100 for reading the image information of the original S transported from said original tray 1101. In the lower left portion of the main body 1001 there is provided a recording system 1200 including a thermal head 1201 constituting recording means and a cutter 1203. On the upper face of the optical reading system 1100, there is provided an unrepresented operation panel. Said optical reading system 1100 is so constructed as to separate the originals S stacked on the original tray 1101 one by one, by means of a separating member 1102 and a separating roller 1103 maintained in pressure contact therewith, to transport the original by a feeding roller 1104a maintained in contact with an idler roller 1104b to the image reading position of a contact image sensor 1105, to read the image information of said original S by pressing said original S to said contact image sensor by pressing means 1106, and to thereafter discharge the original S onto a record cover by a discharge roller 1107a maintained in contact with a discharge idler roller 1107b.

In said contact image sensor 1105, LED's 1105a constituting the light source illuminates the information-bearing surface of the original S, and a photoelectric converting device 1105b, having a light-receiving portion on an original transporting surface side of the contact image sensor 1105, receives the light reflected by said information-bearing surface, thereby reading the image information in the form of an electrical signal. The obtained information is transmitted, in the facsimile mode, to the recording unit of another apparatus, or, in the copy mode, to the recording unit of this apparatus. An upper unit including an upper original guide member 1108 for guiding the upper face of the original S can be opened by rotation about a shaft 1109, thereby facilitating the removal of jammed original or the maintenance of the contact image sensor or an ADF (automatic document feeder).

On the original tray 1101, there is provided a slider 1101a slidable in a direction perpendicular to the transport direction of the original S, namely in the transversal direction of the original S, for aligning the lateral edges of the originals S stacked on said tray 1101.

In said recording system 1200, the thermal head 1201 is driven by the image signal from said contact image sensor 1105 or transmitted from the outside, whereby unrepresented heat generating elements of said thermal head 1201 generate heat corresponding to said image signal. Said thermal head 1201 is pressed by a spring 1204 from behind, toward a recording sheet S'. The platen roller 1202 is rotated in synchronization with the image signal, whereby image information is recorded in a predetermined position on said recording sheet S'. Upon completion of recording by the thermal head 1201, the recording sheet S' is advanced by a desired amount by the platen roller 1202, and is cut by the cutter 1203. After cutting, the recording sheet S' is reversed by the platen roller 1202 again until the front end of the recording sheet comes close to the recording position of the thermal head 1201, and the recording operation is thus completed.

In the facsimile mode, the image recording is conducted with the image signal transmitted from another facsimile apparatus, instead of the image signal from the contact image sensor 1105 of this apparatus.

In the following there will be given a detailed explanation on the optical reading system 1100, with reference to a magnified cross-sectional view in Fig. 5.

The pressing means 1106 is composed of a flexible sheet 1106a serving as the original contacting member, and a metal member 1106b having a square-U shaped section at an end, and is fixed by a screw 1106c onto the upper original guide member 1108.

The flexible sheet 1106a is composed of a flexible film- or plate-shaped member such as a polyester film, and presses the original S onto the reading line (photoelectric converting elements) 1105b of the contact image sensor 1105.

The surface of said flexible sheet 1106a is preferably white, as it is read by the contact image sensor 1105 to provide reference color data in reading the image information of the original S, and it also provides the background color in case of reading a narrow original or a transparent original.

The rear face of the flexible sheet 1106a is adhered, in an area corresponding to the reading position, to a weight 1110a across rubber sponge 1110b. Said weight 1110a is formed by a bent metal plate, of which an end engages vertically movably with the upper original guide member 1108.

The weight 1110a and the rubber sponge 1110b are so sized to apply a pressure over a width of 10 mm, with the image reading position at the center. Said flexible sheet 1106a somewhat protrudes in convex form at a central portion facing said reading line 1105b, whereby the weight 1110a, rendered vertically movable in the inner side at the center of said upper original guide member 1108 and positioned parallel to the reading line 1105b, can effective act on said central portion. In the present embodiment, said weight 1110a is selected as about 40 grams.

The rubber sponge 1110b, positioned between the weight 1110a and the flexible sheet 1106a, is preferably of such a hardness as to show deformation of 0.5 - 1 mm under the application of above-mentioned weight over the entire surface.

When the contact image sensor 1105 lacks the short-focus lenses, the depth of focus is limited to about 50 µm. If the planarity of the reading line 1105b of the contact image sensor involves a fluctuation of ± 150 µm, it is practically difficult to realize satisfactory contact by the rigid weight only. However, the presence of the rubber sponge 1110b, showing flexibility in the pressing direction, between the rigid weight 1110a and the flexible sheet 1106a realizes satisfactory contact of the original without lifting thereof, even on a contact image sensor of poor surface flatness, due to the multiplication effect of the weight 1110a and the elasticity of the flexible sheet 1106a. Thus, on said reading line 1105b, the image-bearing surface of the original S is illuminated by the light from the LED's 1105a, and the light reflected from said image-bearing surface is introduced into the photoelectric converting elements 1105b to achieve reading of the image information of the original S.

In this manner the flexible sheet 1106a, replacing the pressure roller (white rubber roller), allows to maintain the original S in contact with the reading line 1105b with a lower weight than that of said pressure roller, and to realize the pressing means 1106 in a flatter configuration, thereby reducing the total height of the entire device.

Also in reading the surface of the flexible sheet 1106a for the purpose of obtaining reference color data for the image information reading from the original S, there is not required a high precision of assembly for guiding the light, reflected on the flexible sheet 1106a, to the photoelectric converting elements 1105b of the contact image sensor, since the curvature is not so strong as in the pressure roller of a small diameter.

Furthermore, the presence of the rubber sponge 1110b between the weight 1110a and the flexible sheet 1106a allows to securely press the image-bearing surface of the original against the reading position 1105b of the contact image sensor 1105 even if said sensor lacks short-focus lenses and therefore has a limited depth of focus and if the flatness of the reading position 1105b is poor.

Also as the pressing means 1106 does not serve to transport the original S, the material selection for the flexible sheet 1106a is easier and has larger freedom, in comparison with the case in which the transport roller also serves as the pressure roller.

In the foregoing description, a thermal head is adopted as recording means of the recording system 1200, but other recording systems such as ink jet recording or electrostatic recording are naturally usable likewise.

### [Embodiment 1]

In the following there will be explained an embodiment of the present embodiment with reference to the attached drawings.

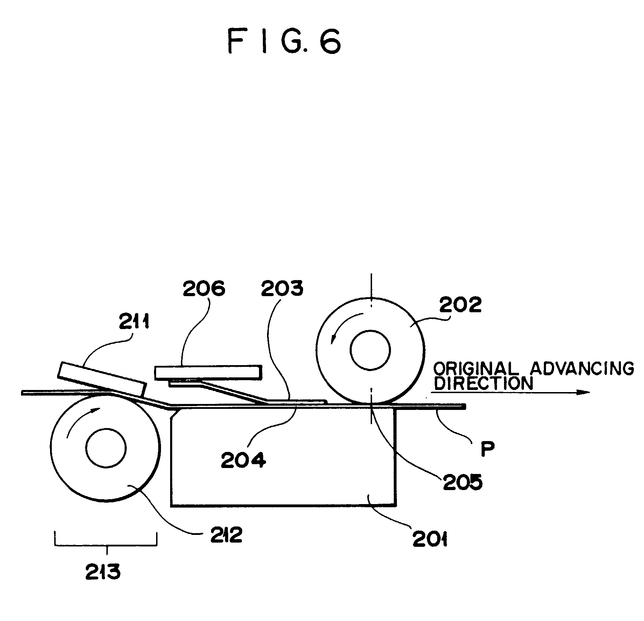

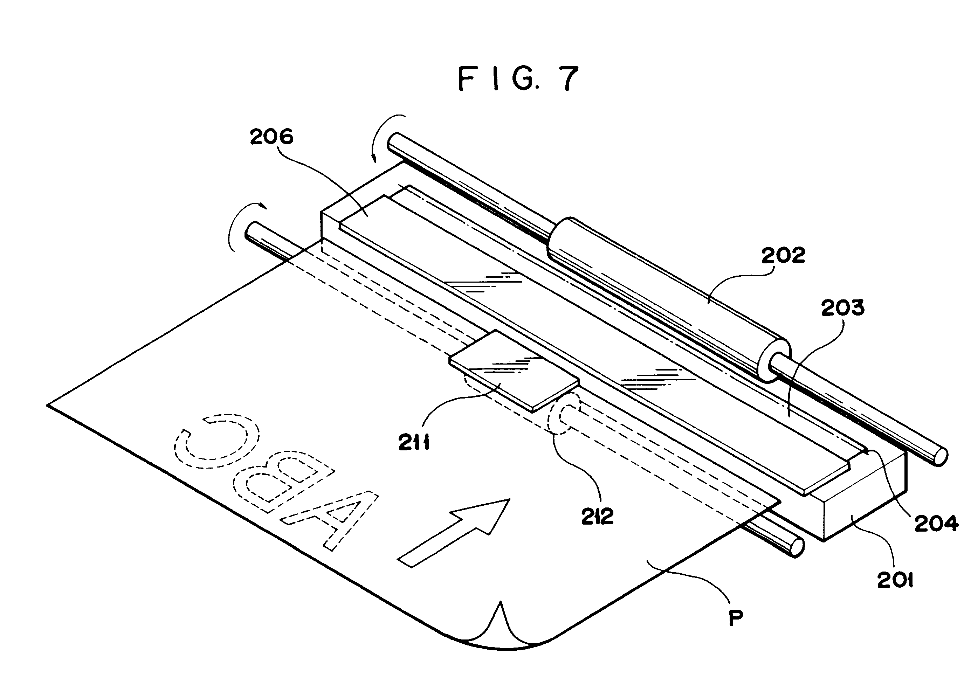

Fig. 6 is a schematic cross-sectional view of a first embodiment of the image reading device of the present invention, and Fig. 7 is a schematic perspective view thereof.

Referring to Figs. 6 and 7, there are shown a line sensor 201 for reading the image of an original P; a transport roller 202 for transporting the original P; an original contacting member 203 for contacting the original P with a reading position 204 of the line sensor 201; and an automatic sheet feeding unit 213 consisting of a combination of a separating member 211 and a feed roller 212. Said original contacting member 203 is positioned out of the contact point 205 between the line sensor 201 and the transport roller 202 in the side of the original feeding unit 213, and outside the nip of the transport roller 202. The distance, on the line sensor 1, between the original contacting member 203 and the transport roller 202 is so determined that the original contacting member 203 at the reading position 204 and the transport roller 202 do not mutually interfere. As the transporting force of the automatic sheet feeding unit 213 may in general become unstable due to change in quality of the paper used for the original, said distance is preferably as short as possible, and, in practice, a distance of 2 - 5 mm is acceptable.

The transport roller 202 can be composed of ethylene-propylene rubber, chloroprene rubber or silicone. The original contacting member 203 can be advantageously composed of a flexible member such as a plastic film of polyester, polyethylene, polyethylene terephthalate, polyetheretherketone, nylon or fluorinated resin, or a metal foil such as aluminum foil or titanium foil. The thickness of the original contacting member 203 is preferably 0.1 mm or less, though it is dependent to a certain extent on the material used. Said flexible member 203 is fixed at an end thereof to the support member 206 by means of adhesion or of fixing screws, and contacts at the other end with the reading position 204 of the line sensor 201, by the weight or elasticity of the flexible member itself.

The foregoing embodiment could provide following advantages:
(1) As the transport roller 202 serves only for the transportation of the original, the rubber portion of said roller could be shortened, whereby it was rendered possible to reduce the influence of flatness of the reading face of the line sensor and to achieve stable original transportation. Also cost reduction could be facilitated as the control of said flatness was made easier;
(2) As the original transporting function and the original contacting function were separated into different members, there could be minimized the pressure required for transporting the original and the pressure required for contacting the original with the line sensor. Thus the pressure required for deforming the transport roller 202 for absorbing the unevenness on the surface of the line sensor was no longer required. For this reason the load on the motor could be reduced, and it was made possible to reduce the dimension and cost of the motor;
(3) Skewed sheet advancement hardly took place even if the sheet was supplied in skewed manner.

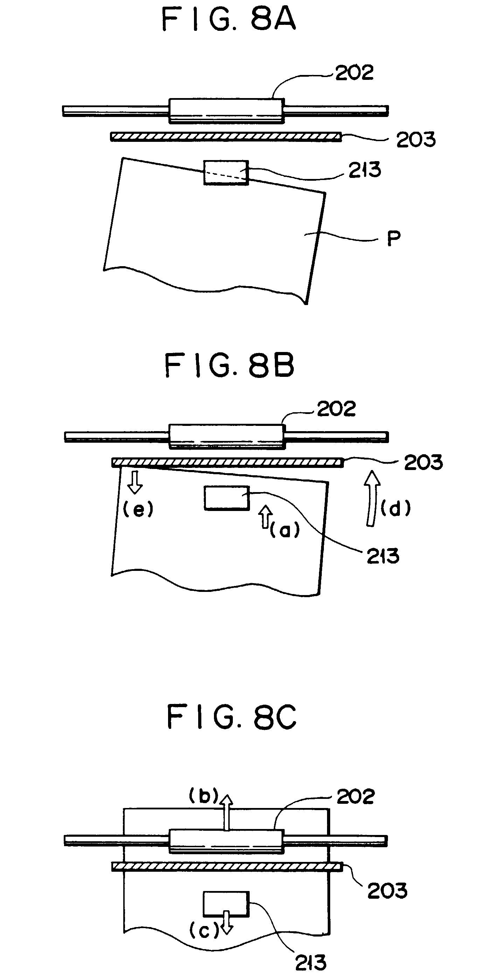

   Figs. 8A to 8C are schematic plan views of embodiments of the present invention, wherein the line sensor, not illustrated in these drawings, is positioned behind the transport roller 202. When the original P is supplied in skewed position as shown in Fig. 8A, the front end of said original P impinges on the original contacting means 203, lacking the transporting function, thereby generating a resistance (e) as indicated by an arrow in Fig. 8 B. The automatic feeding unit 213 exerts a feeding force (a) indicated by an arrow, which, in cooperation with said resistance (e), generates a rotating force (d), also indicated by an arrow and serving to correct the position of the original P, whereby the original P is returned to a proper position. When said resistance (e) becomes distributed over the entire front end of the original, said feeding force (a) overcome the resistance (e) and feeds the original into the transport roller 202. Referring to Fig. 8C, since the transport roller 202 is constructed short, there is scarcely generated a rotating force between the load (c) of the automatic feeding unit 213 and the transporting force (b) of the transport roller 202. For this reason, skew-free transportation of the original could be realized. Skewed advancement could further be prevented by aligning the center of the rubber portion of the transport roller 202, in the main scanning direction, with the center of the automatic original feeding unit 213 and with the center of effective reading length of the unrepresented line sensor;
(4) The original contacting means 203 was made white in at least a part of the reading position, in order to avoid undesirable influence in case of reading an original on thin paper, transparent sheet or with a narrow width. Also there could be provided reference white color in multi-level image reading. More specifically, the output of the line sensor 201 can be electrically corrected for example by memorizing said output by the unit of bits, taking the reflectance of white area of the original contacting means 203 as reference. Said white area may be formed by constituting the original contacting means 203 itself with a white material, or by white printing or painting on a surface, facing the original, of the means 203. Furthermore, a similar effect could be obtained also by such printing or painting on a surface, opposite to said original, of transparent original contacting means 203.

### [Embodiment 2]

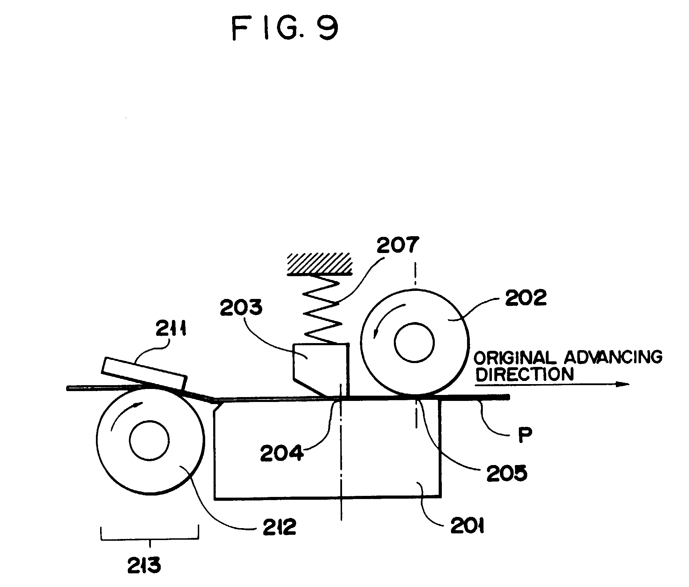

Fig. 9 is a schematic cross-sectional view of a 2nd embodiment of the image reading device of the present invention, wherein original contacting means is composed of an elastic member 203 and a spring 207. The elastic member 203 is composed of rubber or sponge, or a member structurally showing elasticity. The spring 207 serving as the pressing means could be replaced by gravity as in the embodiment 1, with similarly satisfactory results. Also the present embodiment could provide similar effects as those in the embodiment 2.

### [Embodiment 3]

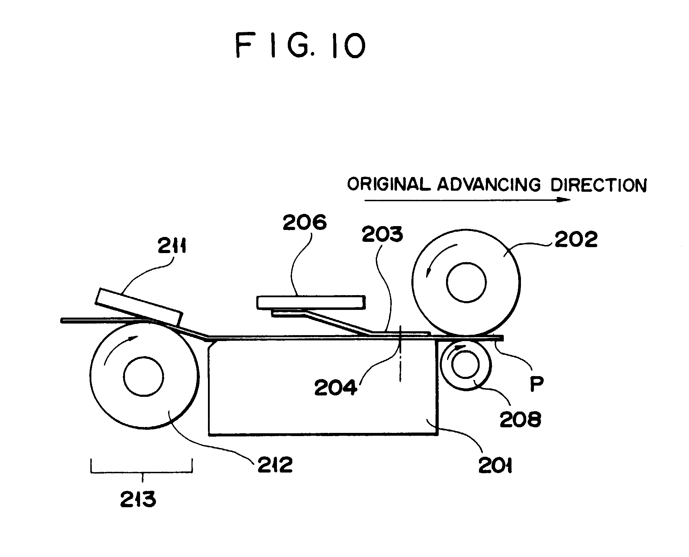

Fig. 10 is a schematic cross-sectional view of a 3rd embodiment of the image reading device of the present invention, wherein a transport roller 202 is provided outside a line sensor 201. A backup idler roller 208 is pressed to the transport roller 202 and serves to transport the original P by pinching the same in cooperation with the transport roller 202. The original pressing means employs a flexible member 203 as shown in Fig. 6. Also the present embodiment could provide excellent effects as those in the 1st embodiment.

### [Embodiment 4]

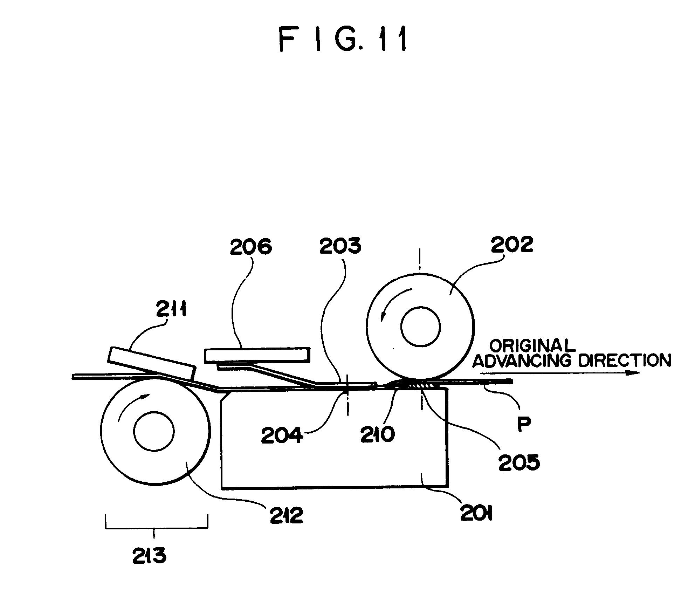

Fig. 11 is a schematic cross-sectional view of a 4th embodiment of the image reading device of the present invention, wherein provided, at the contact point 205 of the transport roller 202 in the 1st embodiment shown in Fig. 6, a member 210 (hereinafter called sliding member) which has a friction coefficient smaller than that between the reading plane of the line sensor 201 and the transport roller 202. The reading plane of the line sensor 201 is usually composed of glass, and the sliding member 210 is preferably composed of fluorinated resin. Said sliding member 210 may be formed by printing, coating or adhesion on the reading plane of the line sensor 201, or may be provided in other parts than the reading plane, such as a casing part of the line sensor 201 as long as it does not hinder the advancement of the original. Thus there could be obtained, in addition to the advantages of the foregoing embodiments, an advantage of driving the transport roller 202 with a light load even in the absence of the original P at the contact point 5 of the transport roller 202, whereby compactization of the motor and reduction of power consumption thereof could be effectively attained.

### [Embodiment 5]

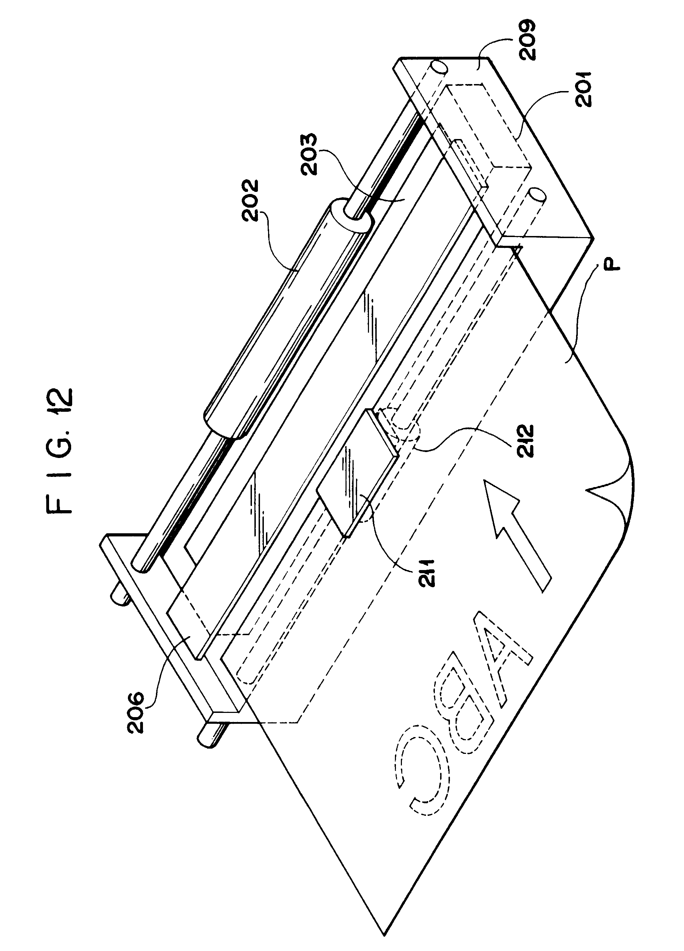

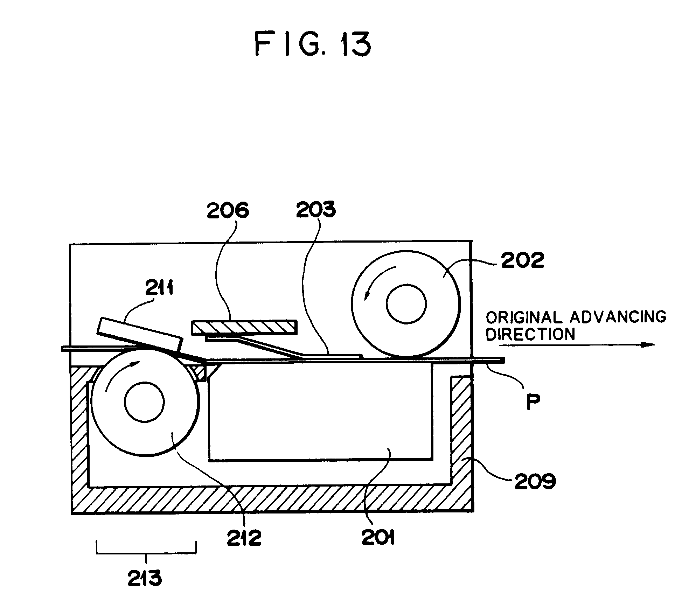

Figs. 12 and 13 illustrates a 5th embodiment of the image reading device of the present invention, wherein the device shown in Fig. 6 is constructed as an integral unit in a frame. A separating member 211 is supported by an unrepresented member and fixed to a frame 209. Said frame 209 integrally supports a line sensor 201, a separating member 211, a feed roller 212, a transport roller 202 and original contacting means 203.

In this manner the assembly of the information processing apparatus and the detachment of the image reading device, for example in case of malfunction thereof, from the information process apparatus can be replaced even by a person without particular skill and without particular tools.

Also said unit structure allows to reduce the costs relating to the designing and assembling of the information processing apparatus, thereby enabling to provide such aparatus with a reduced cost.

As described in the above, the driving power transmission means, even though not shown, of course, may be comprises plurality of gearings and timing belts, or the like.

### [Embodiment 6]

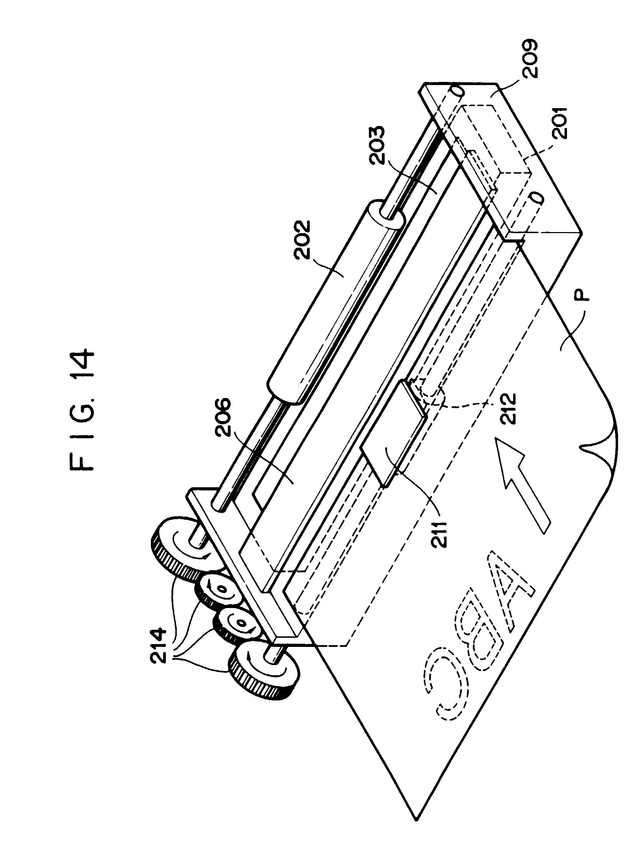

Fig. 14 shows, as another embodiment of the image reading apparatus according to the present invention, an example constituted into an unit by integrally incorporating into a frame an original image reading device as shown in Fig. 6. A separate strip 211 is supported by not shown member, and is secured to a frame 209. The frame 209 has a structure for integrally supporting a line sensor 201, the separating strip 211, a paper supplying roller 212, a transporting roller 202, and an original contacting means 203.

The paper supplying roller 212 and the transporting roller 202 are driven by four gearings 214 serving as a driving power transmission means for transmitting driving power from a driving power source provided within the apparatus body (for example, whole structure including a transmission means of the facsimile apparatus). Thereby, by means of a single motor, both the paper supplying roller 212 and the transporting roller can be driven.

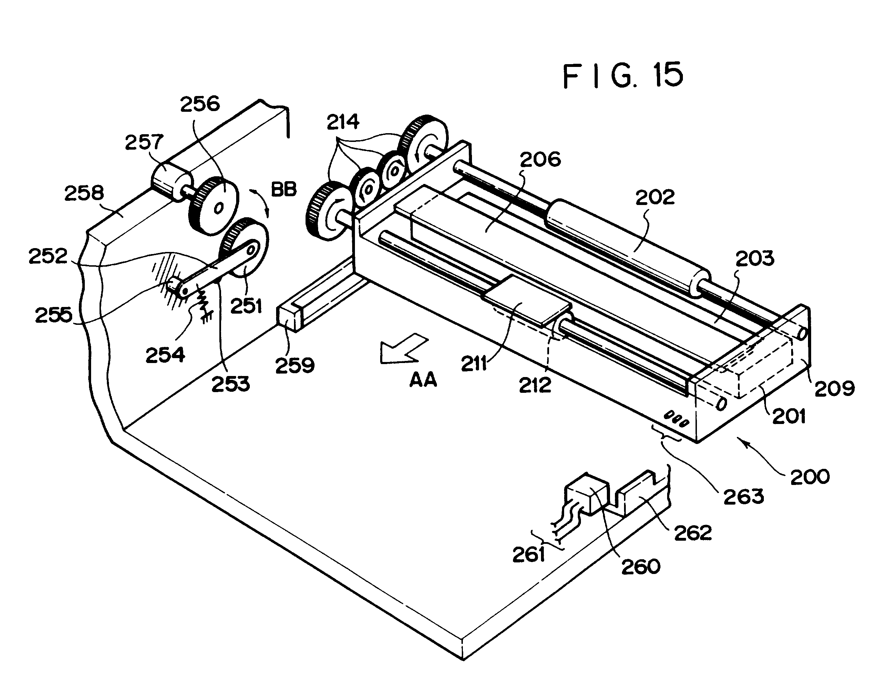

Fig. 15 is a schematic illustrative view showing combining the unit shown in Fig. 8 with the apparatus body.

The unit 200 is moved along guides 259 and 262 in parallel with arrow AA. At an end of the longer guide 259, a stopper is provided. At an end of the shorter guide 262, a connector 260 also serving as a stopper is provided. The connector 260 is provided for electrical connection with a signal terminal 263 at a side of the unit 200. The signal terminal 263 includes lines for transmitting a driving signal of the line sensor 201, an image signal from the line sensor 201, a reference signal, and is electrically connected to the apparatus body via a wiring 261 by means of a counted with a connector 260, thereby being controllable each other.

At a frame 258 on the apparatus body side to which members 259 - 262 are secured, a motor 257 is provided as a driving source on a side wall thereof. The motor 257 is provided with a gearing 256, which is engaged with a gearing 251 at the combining unit 200, thereby the driving power is transmitted via the gearing 251 to a gearing 214 at a side of unit. By means of the driving power such transmitted, the rollers 202, and 212 are rotated. The gearing 251 is mounted on an arm 252, is rotatable about an axis 255 fixed on the side wall, and pivotable about 255 in a direction of arrow BB. When the unit 200 is not mounted, the arm 252 is biased downwardly by means of a spring 254. And, at a lower position, a stopper 253 is provided to limit a pivotaly movement of the arm 252 (Fig. 15).

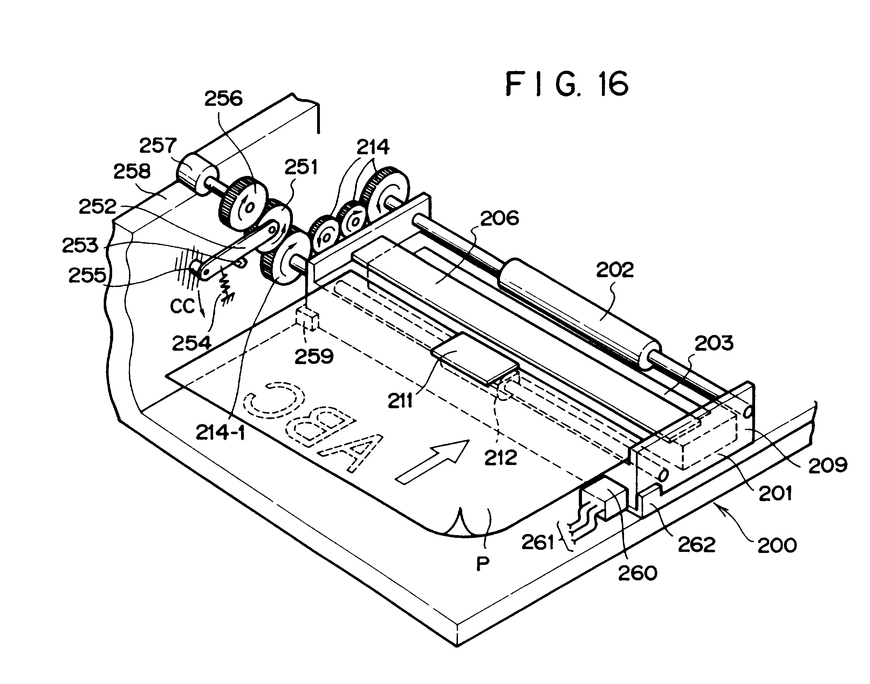

Next, Fig. 16 shows a state wherein the unit 200 is completely combined with the body frame 252.

As the unit moves along the arrow AA (Fig. 15), among transmission gearings 214, the gearing 214-1 provided on an axis of the paper supplying roller 212 is engaged with the gearing 251. By means of the gearing 214-1, the gearing 251 is pushed upwardly against a biasing CC, so as to engage with the gearing 256 of the driving power source.

Further moving the unit 200, simultaneously with limiting movement of the stoppers 259 and 260, the electrical connection through the connector 260 is completed.

In this time, the gearings 214-1, 251, 256 mesh with one another (Fig. 16).

Due to this structure, the image reading apparatus formulated into the unit can be combined and divided readily and securely. Further, since the driving source such as a motor is remained at the side of the apparatus, the cost of the unit can be reduced. There is no severe requirement in durability of several members in mounting them on the unit, thereby reducing whole size and weight.

The electrical connection between the unit 200 and the apparatus body is achieved by the signal terminal 263 provided at the unit 200 and the corresponding the connector 260 at the apparatus body according to the above described embodiment. However, the terminal and connector may be provided respectively the body and the unit. Further, it is desirable that, simultaneously with the combining, the electrical connection therebetween is achieved, while the combining of the unit and the electrical connection may be separately in a two actions. When the motor as a driving source is mounded within an unit, the power source for driving it may supplies power via the connector.

The mechanical connection and the electrical connection may be checked by a detection means, in concrete, may be checked by either or both detecting pivotal position of the arms 252 by means of micro switch or the like, and by an electric signal communication via the electrical connecting section. Of course, it is possible to check the connection at another section by means of the micro switch or the electrical detection.

### [Embodiment 7]

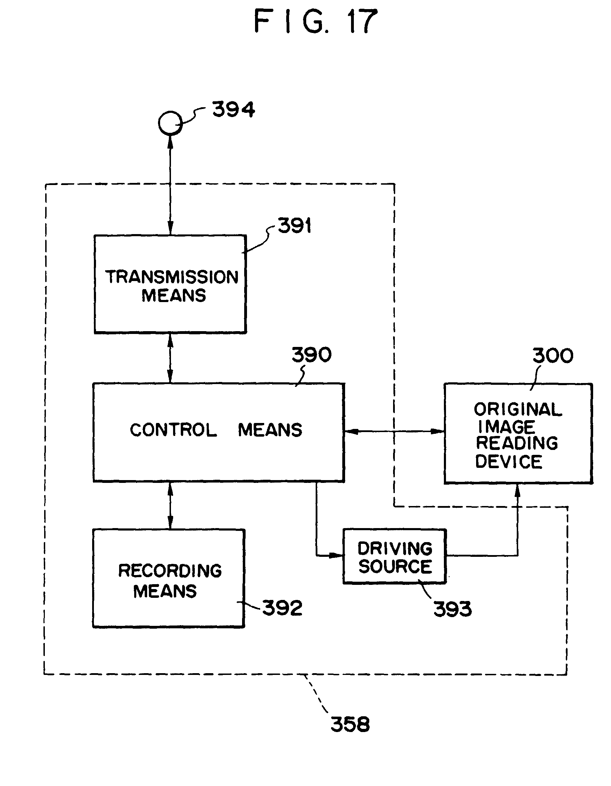

Fig. 17 shows, as a schematic block diagram, an example of a facsimile apparatus having an image reading apparatus according to the present invention.

Upon inserting an original P into an original image reading apparatus 300, and upon starting transmitting operations, by means of an driving source 393, an apparatus 300 rotates a transporting roller to transport an original, and reads image information by means of a line sensor. The information is stored in a memory of a control means 90 as an electric signal.

Further, upon connecting with an external circuit 394 connected via the transmitting means to an end to be transmitted, the image signal within the memory is transmitted via the transmission means.

While, in the above embodiments, several types of the image reading apparatus are shown for use in the facsimile transmission, in each cases, secure information transmission can be obtained.

Further, a recording means 392 records on a recording medium the image information transmitted. As such recording means, a thermal head, an ink jet recording head or the like may be used.

As explained in the foregoing, the present invention is featured by the use of pressure means consisting of a flexible sheet for maintaining the original document in close contact, without lifting or movement, with the reading portion of reading means, whereby the pressure means can be constructed in a flatter configuration and the total height of the apparatus can therefore be reduced.

Also since the pressure means is flat, there is not required a high precision of assembly in order to guide the reflected light to the reading portion, in comparison with the case of conventional pressure means with a curved surface.

Also a member flexible in the pressing direction is inserted between the weight and the flexible sheet constituting the pressure means to improve the contact, so that the image reading device of the present invention can be used for a contact image sensor of a limited depth of focus.

Furthermore the pressure means itself is made free of the transporting function, so that the selection of material therefor is made easier in comparison with the case of conventional pressure roller.

Furthermore, the image reading device of the present invention is capable of resolving the skewed advancement, elevated cost and large motor dimension, thereby attaining reductions in the dimension, weight and cost which are desired particularly in recent years. Furthremore, a unit structure integrally containing the components in a frame allows to improve the precision of assembly of the components relating to the original image reading. In addition, said unit can be standardized and incorporated in various models of the image information processing apparatus for significantly reduce the works involved in the designing, evaluation and manufacture, thereby achieving a total cost reduction of such apparatus.

Furthermore, as said image reading device can be realized in a compact and light-weight unit, the layout in the image information processing apparatus is facilitated and the freedom of designing is widened.

Furthermore, in case of a defect or a malfunction of the image reading device incorporated in the image information processing apparatus, the trouble can be repaired by simple replacement of the unit by the operator without particular training, skill or tools.

As explained in the foregoing, the present invention provides a cbmpact, light-weight and inexpensive image reading device, which is adapted for use in various image processing apparatus, such as a facsimile, an image sensor, a computer, a word processor, a copying machine or the like.

## Claims

1. An image reading device comprising illuminating means for illuminating an original (S), reading means (201) for receiving light which carries an information reflected by the original, original pressing means (206, 203) for pressing and maintaining the original at a reading position and original conveying means (202, 212) characterized in that the original conveying means (202, 212) comprise an original conveying roller (202) arranged on a downstream side of the reading position (204), said roller (202) having a width narrower than a reading width of the reading means (201).

2. A device according to claim 1, wherein the original pressing means (206, 203) comprises a flexible member (203).

3. A device according to claim 1, wherein the original pressing means (206, 203) comprises a flexible sheet (203).

4. A device according to claim 1 or 3, wherein the original pressing means comprises a flexible member (1106a) and means (1110a, 1110b) for pressing the flexible member.

5. A device according to claim 4, wherein the means (1110a, 1110b) for pressing the flexible member comprises a weight member (1110a).

6. A device according to claim 4, wherein the means for pressing the flexible member comprises a spring (207).

7. A device according to claim 4, wherein the means for pressing the flexible member comprises a rubber sponge (1110b).

8. A device according to claim 2 or 3, wherein the flexible member (203, 1106a) is plate-shaped.

9. A device according to claim 2 or 3, wherein the flexible member (203) comprises an organic resin.

10. A device according to claim 2 or 3, wherein at least a part of the flexible member (203) is made white.

11. A device according to claim 3, wherein at least a part of the flexible sheet (1106a) is made white.

12. A device according to claim 1 which further comprises a driving source for driving an original conveying roller (202) serving as original conveying means.

13. A device according to any of preceding claims, wherein the reading means (1105b) and the illuminating means (1105a) constitute one unit (1105).

14. A device according to any of preceding claims, wherein the image reading device (201) is one unit.

15. A device according to any of preceding claims which further comprises driving power transmission means (214) for transmitting power for driving the original conveying roller (202) from an external portion of the device.

16. A device according to claim 14, wherein the reading means (201) has a reading region extending at least over a width of the original (S).

17. A device according to any of preceding claims, the reading means (1105) comprises a contact type image sensor.

18. An information processing apparatus comprising an image reading device according to any of preceding claims, an original stacker unit (1101) for supporting an original (S) to be fed to the image reading device, an operation panel, and, and recording means (1201).

19. An apparatus according to claim 18 which further comprises a cutter (1203) for cutting a recording member to be recorded information by the recording means (1201).

20. An apparatus according to claim 18 or 19, wherein the recording means (1201) comprises a thermal head.

21. An apparatus according to claim 18 or 19, wherein the recording means comprises an ink jet recording head.

22. An apparatus according to claim 21, wherein the ink jet recording head discharges ink utilizing thermal energy.

## Patentansprüche

1. Bildlesegerät mit einer Beleuchtungseinrichtung zum Beleuchten einer Vorlage (S), einer Leseeinrichtung (201) zum Empfangen von von der Vorlage reflektiertem Licht, welches eine Information enthält, einer Vorlagenandruckeinrichtung (206, 203) zum Andrücken und Halten der Vorlage an einer Leseposition und mit einer Vorlagenfördereinrichtung (202, 212), **dadurch gekennzeichnet,** daß die Vorlagenfördereinrichtung (202, 212) eine Vorlagenförderwalze (202) hat, die an einer stromabwärtigen Seite der Leseposition (203) angeordnet ist, wobei die Walze (202) eine Breite hat, die schmaler ist, als eine Lesebreite der Leseeinrichtung (201).

2. Gerät nach Anspruch 1, wobei die Vorlagenandruckeinrichtung (206, 203) ein flexibles Element (203) aufweist.

3. Gerät nach Anspruch 1, wobei die Vorlagenandruckeinrichtung (206, 203) ein flexibles Blatt (203) aufweist.

4. Gerät nach Anspruch 1 oder 3, wobei die Vorlagenandruckeinrichtung ein flexibles Element (1106a) und eine Einrichtung (1110a, 1110b) zum Andrücken des flexiblen Elements aufweist.

5. Gerät nach Anspruch 4, wobei die Einrichtung (1110a, 1110b) zum Andrücken des flexiblen Elements ein Gewichtselement (1110a) aufweist.

6. Gerät nach Anspruch 4, wobei die Einrichtung zum Andrücken des flexiblen Elements eine Feder (207) aufweist.

7. Gerät nach Anspruch 4, wobei die Einrichtung zum Andrücken des flexiblen Elements einen Gummischwamm aufweist.

8. Gerät nach Anspruch 2 oder 3, wobei das flexible Element (203, 1106a) plattenförmig ist.

9. Gerät nach Anspruch 2 oder 3, wobei das flexible Element (203) ein organisches Harz aufweist.

10. Gerät nach Anspruch 2 oder 3, wobei mindestens ein Teil des flexiblen Elements (203) weiß gemacht ist.

11. Gerät nach Anspruch 3, wobei mindestens ein Teil des flexiblen Blatts (1106a) weiß gemacht ist.

12. Gerät nach Anspruch 1, welches ferner eine Antriebsquelle zum Antrieb einer Vorlagenförderwalze (202) aufweist, die als Vorlagenfördereinrichtung dient.

13. Gerät nach einem der vorhergehenden Ansprüche, wobei die Leseeinrichtung (1105b) und die Beleuchtungseinrichtung (1105a) eine Einheit (1105) bilden

14. Gerät nach einem der vorhergehenden Ansprüche, wobei das Bildlesegerät (201) eine Einheit ist.

15. Gerät nach einem der vorhergehenden Ansprüche, welches ferner eine Antriebskraftübertragungseinrichtung (214) zum Übertragen von Kraft zum Antrieb der Vorlagenförderwalze (202) von einem externen Anschnitt des Geräts hat.

16. Gerät nach Anspruch 14, wobei die Leseeinrichtung (201) einen Lesebereich hat, der sich mindestens über eine Breite der Vorlage (S) erstreckt.

17. Gerät nach einem der vorhergehenden Ansprüche, wobei die Leseeinrichtung (1105) einen Kontakttypbildsensor aufweist.

18. Informationsverarbeitungsgerät mit einem Bildlesegerät nach einem der vorhergehenden Ansprüche, einer Vorlagenstapeleinheit (1101) zum Tragen einer dem Bildlesegerät zuzuführenden Vorlage, einem Bedienpult und mit einer Aufzeichnungseinrichtung (1201).

19. Gerät nach Anspruch 18, welches ferner einen Schneider (1203) zum Schneiden eines Aufzeichnungselements zum Aufzeichnen von Informationen durch die Aufzeichnungseinrichtung (1201) versehen ist.

20. Gerät nach Anspruch 18 oder 19, wobei die Aufzeichnungseinrichtung (1201) einen thermischen Kopf aufweist.

21. Gerät nach Anspruch 18 oder 19, wobei die Aufzeichnungseinrichtung einen Tintenstrahlaufzeichnungskopf aufweist.

22. Gerät nach Anspruch 21, wobei der Tintenstrahlaufzeichnungskopf Tinte unter Verwendung thermischer Energie ausstößt.

## Revendications

1. Dispositif de lecture d'images comportant des moyens d'éclairage destinés à éclairer un original (S), des moyens de lecture (201) destinés à recevoir de la lumière qui porte une information réfléchie par l'original, des moyens (206, 203) d'application de pression à l'original destinés à presser et maintenir l'original dans une position de lecture et des moyens (202, 212) de transport d'original, caractérisé en ce que les moyens (202, 212) de transport d'original comprennent un rouleau (202) de transport d'original disposé en aval de la position de lecture (204), ledit rouleau (202) ayant une largeur inférieure à la largeur de lecture des moyens de lecture (201).

2. Dispositif selon la revendication 1, dans lequel les moyens (206, 203) d'application de pression à l'original comprennent un élément flexible (203).

3. Dispositif selon la revendication 1, dans lequel les moyens (206, 203) d'application de pression à l'original comprennent une feuille flexible (203).

4. Dispositif selon la revendication 1 ou 3, dans lequel les moyens d'application de pression à l'original comprennent un élément flexible (1106a) et des moyens (1110a, 1110b) destinés à appliquer une pression à l'élément flexible.

5. Dispositif selon la revendication 4, dans lequel les moyens (1110a, 1110b) destinés à appliquer une pression à l'élément flexible comprennent un élément pesant (1110a).

6. Dispositif selon la revendication 4, dans lequel les moyens destinés à appliquer une pression à l'élément flexible comprennent un ressort (207).

7. Dispositif selon la revendication 4, dans lequel les moyens destinés à appliquer une pression à l'élément flexible comprennent une éponge en caoutchouc (1110b).

8. Dispositif selon la revendication 2 ou 3, dans lequel l'élément flexible (203, 1106a) est en forme de plaque.

9. Dispositif selon la revendication 2 ou 3, dans lequel l'élément flexible (203) comprend une résine organique.

10. Dispositif selon la revendication 2 ou 3, dans lequel au moins une partie de l'élément flexible (203) est réalisée de façon à être blanche.

11. Dispositif selon la revendication 3, dans lequel au moins une partie de la feuille flexible (1106a) est réalisée de façon à être blanche.

12. Dispositif selon la revendication 1, qui comporte en outre une source de force d'entraînement pour entraîner un rouleau (202) de transport d'original servant de moyen de transport d'original.

13. Dispositif selon l'une quelconque des revendications précédentes, dans lequel les moyens de lecture (1105b) et les moyens d'éclairage (1105a) constituent un bloc (1105).

14. Dispositif selon l'une quelconque des revendications précédentes, dans lequel le dispositif (201) de lecture d'images est un bloc.

15. Dispositif selon l'une quelconque des revendications précédentes, qui comporte en outre des moyens (214) de transmission de force d'entraînement destinés à transmettre une force pour entraîner le rouleau (202) de transport d'original depuis une partie extérieure du dispositif.

16. Dispositif selon la revendication 14, dans lequel les moyens de lecture (201) comprennent une région de lecture s'étendant au moins sur la largeur de l'original (S).

17. Dispositif selon l'une quelconque des revendications précédentes, les moyens de lecture (1105) comprenant un capteur d'image du type à contact.

18. Appareil de traitement d'informations comportant un dispositif de lecture d'images selon l'une quelconque des revendications précédentes, une unité (1101) d'empilage d'originaux destinée à supporter un original (S) devant être amené au dispositif de lecture d'images, un tableau de commande et des moyens d'enregistrement (1201).

19. Appareil selon la revendication 18, qui comporte en outre un organe coupant (1203) destiné à couper un support d'enregistrement sur lequel des informations sont destinées à être enregistrées par les moyens d'enregistrement (1201).

20. Appareil selon la revendication 18 ou 19, dans lequel les moyens d'enregistrement (1201) comprennent une tête thermique.

21. Appareil selon la revendication 18 ou 19, dans lequel les moyens d'enregistrement comprennent une tête d'enregistrement à jet d'encre.

22. Appareil selon la revendication 21, dans lequel la tête d'enregistrement à jet d'encre décharge de l'encre en utilisant de l'énergie thermique.
